Europäisches Patentamt

European Patent Office

Office européen des brevets

(19)

(11) Veröffentlichungsnummer: **0 192 049**
**A1**

(12) # EUROPÄISCHE PATENTANMELDUNG

(21) Anmeldenummer: **86100589.0**

(22) Anmeldetag: **17.01.86**

(51) Int. Cl.⁴: **G 06 F 13/36**
**G 09 G 1/28**

(30) Priorität: **24.01.85 DE 3502316**

(43) Veröffentlichungstag der Anmeldung:
**27.08.86 Patentblatt 86/35**

(84) Benannte Vertragsstaaten:
**AT CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Kretzschmar, Bernd, Dipl.-Ing. (FH)**
**Im Kirschspitzen 19**
**D-7552 Durmersheim(DE)**

(54) **Schaltungsanordnung zum Übertragen von Daten über eine Busleitung.**

(57) Es sind Bussysteme bekannt, die neben Datenleitungen Prioritätsleitungen aufweisen. Um Zugriff zu den Datenleitungen zu erhalten, schalten die Signalquellen ihre Adressen in codierter Form auf die Prioritätsleitungen. Durch bitweisen Vergleich der auf diesen entstehenden Signale mit der jeweils eigenen Adresse wird die Signalquelle mit der höchsten Priorität erkannt. Zum Beschleunigen dieses Verfahrens wird vorgeschlagen, die Priorität der auf den Bus zu übertragenden Daten decodiert einerseits auf die Prioritätsleitungen (PL) zu schalten und andererseits um eine Stelle "nach links" zu verschieben. Das so modifizierte Prioritätssignal wird mit dem auf den Prioritätsleitungen (PL) gebildeten Signal verglichen. Ist es größer, werden die Daten auf die Datenleitung aufgeschaltet.

Die Erfindung wird angewandt bei Sichtgerätesteuerungen.

EP 0 192 049 A1

FIG 1

Siemens Aktiengesellschaft    Unser Zeichen
Berlin und München           VPA 85 P 4 4 0 6

**Schaltungsanordnung zum Übertragen von Daten über eine Busleitung**

Die Erfindung betrifft eine Schaltungsanordnung zum Übertragen von Daten über eine Daten- und Prioritätsleitungen aufweisende Busleitung gemäß dem Oberbegriff des Anspruchs 1.

Aus der US-PS 37 10 351 ist eine Datenverarbeitungsanlage mit mehreren Prozessoren bekannt, die unterschiedliche, durch ihre Adressen gekennzeichnete Prioritäten haben und die über eine Daten- und Prioritätsleitungen enthaltende Busleitung miteinander verbunden sind. Stellen mehrere Prozessoren gleichzeitig eine Anforderung auf Zugriff auf die Busleitung, erhält von diesen nur der mit der höchsten Priorität den Zugriff. Hierzu schalten die Prozessoren, beginnend mit dem höchstwertigen Bit, die Adressen bitweise auf die Prioritätsleitungen, und die eine Anforderung stellenden Prozessoren vergleichen das von ihnen aufgeschaltete Bit mit dem über die Prioritätsleitungen empfangenen Bit. Nach jedem Vergleichsschritt beteiligen sich nur noch die Prozessoren an den weiteren Schritten, bei denen aufgeschaltetes und empfangenes Signal gleich waren, bis schließlich nur der Prozessor mit der höchsten Priorität übrig bleibt, der dann den Zugriff zum Bus erhält. Nachteilig an dem bekannten System ist vor allem die lange Zeit, die zum Auffinden des Prozessors mit der höchsten Priorität benötigt wird.

Der vorliegenden Erfindung liegt die Aufgabe zugrunde, die Anordnung gemäß dem Oberbegriff des Anspruchs 1 dahingehend zu verbessern, daß die Signalquelle mit der

Zin 4 Scl / 18.01.1985

höchsten Priorität schneller ermittelt wird. Der schaltungstechnische Aufwand soll dabei gering sein.

Erfindungsgemäß wird diese Aufgabe mit den im kennzeichnenden Teil des Anspruchs 1 angegebenen Schaltungsmaßnahmen gelöst.

Je Prioritätsstufe ist in der neuen Anordnung eine Prioritätsleitung vorgesehen. Die Signalquellen, die Zugriff zum Bus anfordern, schalten gleichzeitig log. "1"-Signale jeweils auf die der Priorität der zu sendenden Nachricht entsprechende Prioritätsleitung. Den Vergleicheranordnungen der einen Zugriff anfordernden Signalquellen werden je zwei Signalkombinationen zugeführt: ein aus dem Anforderungssignal der eigenen Signalquelle abgeleitetes Signal und die durch Überlagerung gebildete Summe der Anforderungssignale aller Signalquellen.

Für den Vergleich dieser beiden Signale gibt es verschiedene Lösungen. Eine erste besteht darin, daß an die Busleitung ein Prioritäts-Encoder angeschlossen ist, der das höchstpriore Eingangssignal codiert. Dessen Ausgangssignal wird dem einen Eingang eines dualen Vergleichers zugeführt, an dessen anderen Eingang das codierte Anforderungssignal liegt. Bei Gleichheit der beiden Signale wird das Freigabesignal abgegeben.

Bei einer zweiten Lösung ist ein Prioritätsbaustein eingesetzt, der von der auf der Busleitung gebildeten Signalkombination das höchstpriore Signal durchschaltet. An seinem Ausgang entsteht somit ein (1 aus n)-Signal, das einem Multiplexer zugeführt wird, an dessen Steuereingang das Anforderungssignal liegt. Dieser gibt das Freigabesignal ab, wenn die Wertigkeit des (1 aus n) Signals gleich der des Anforderungssignals ist.

In einer weiteren Lösung werden die auf der Busleitung gebildeten Signalkombination und das in ein (1 aus n)-Signal umgesetzte Anforderungssignal unmittelbar miteinander verglichen, derart, daß das Freigabesignal erzeugt wird, wenn die Wertigkeiten des höchstprioren Signals auf der Busleitung gleich der des Anforderungssignals ist.

Die drei beispielsweise genannten Lösungen haben den Nachteil, daß an für die Arbeitsgeschwindigkeit kritischen Stellen Bausteine eingefügt sind, welche die Arbeitsgeschwindigkeit herabsetzen, oder, wie bei der dritten Lösung, eine Schaltung verwendet wird, die nicht als Baustein im Handel erhältlich und damit aufwendig ist.

Eine Lösung, die eine hohe Arbeitsgeschwindigkeit aufweist und dennoch kostengünstig ist, besteht darin, daß das codierte Anforderungssignal dual mit dem Faktor 2 multipliziert wird, was gleich einer Verschiebung um eine Stelle "nach links" ist. Das so modifizierte Anforderungssignal wird mit der Summe der Anforderungssignale dual verglichen. Entspricht das erste Signal einer größeren Dualzahl als die Signalsumme, liegt keine weitere Anforderung mit größerer Priorität vor, und die Vergleicheranordnung gibt ein Freigabesignal zum Aufschalten der Daten auf die Datenleitungen ab.

Die vorliegende Erfindung kann zwar bei verschiedenen Bussystemen, z. B. bei schnellen Multiprozessor-Systemen eingesetzt werden, sie eignet sich aber besonders für Sichtgerätesteuerungen mit mehreren Bildsignalquellen, in denen Bilder gespeichert sind, die auf einem Sichtgerät überlagert dargestellt werden sollen. An die Datenleitungen ist in diesem Falle zweckmäßig eine Farbtabelle angeschlossen, welche die von den Signalquellen aufgeschalteten Bildsignale decodiert und an die ein Digital-Analog-Umsetzer angeschlossen ist. Die von den Signalquellen abgegebenen Prioritätssignale geben die Priorität an, mit der das jeweils zugehörige Bildsignal als Bildelement dargestellt wird. Es können daher Bilder, einzelne Bildteile oder auch nur Bildelemente gegenüber anderen mit Vorrang dargestellt werden, wobei die Prioritätsstufe nicht an die Signalquelle gebunden ist. Je nach der für die Busleitung verwendeten Schaltkreis-Technologie kann gleichzeitig abgegebenen Bildsignalen verschiedener Signalquellen dieselbe Priorität zugeordnet werden, so daß dann Mischfarben entstehen.

Anhand der Zeichnung werden im folgenden die Erfindung sowie weitere Vorteile und Ergänzungen näher beschrieben und erläutert.

Figur 1 zeigt das Prinzipschaltbild eines Ausführungsbeispiels der Erfindung,
die Figur 2 veranschaulicht die Funktion des Ausführungsbeispiels nach Figur 1.

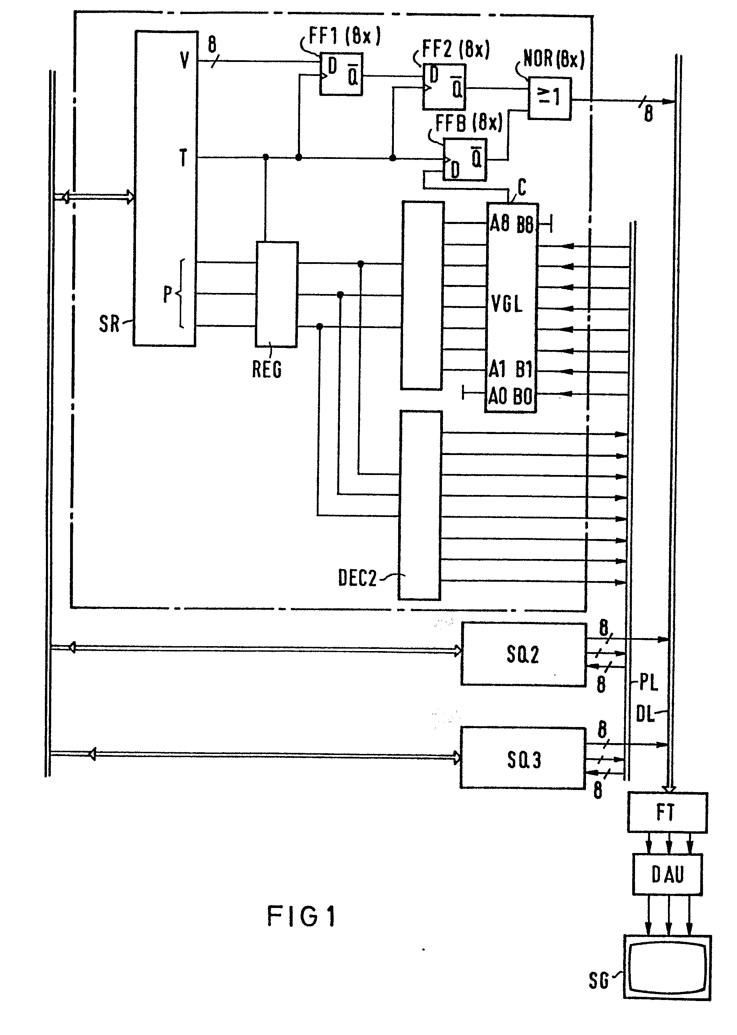

In Figur 1 ist mit SG ein Sichtgerät bezeichnet, auf dessen Bildschirm Kurven, Graphiken, alphanumerische Zeichen und dergleichen dargestellt werden sollen. Die hierzu erforderlichen Bildsignale werden von Bildsignalquellen SQ1, SQ2, SQ3 über Datenleitungen DL einer Farbtabelle FT, der ein Digital-Analog-Umsetzer DAU nachgeschaltet ist, an den das Sichtgerät SG angeschlossen ist. Die Datenleitungen DL bilden zusammen mit Prioritätsleitungen PL eine Busleitung, an welche die Signalquellen parallel angeschlossen sind. Außer den gezeigten drei Signalquellen können noch weitere, z. B. fünf, an die Busleitung angeschlossen sein.

Die Signalquellenen sind übereinstimmend aufgebaut; anhand der Quelle SQ1 werden ihr Aufbau und ihre Funktion näher beschrieben. Die darzustellenden Informationen erhalten sie von einem nicht gezeigten übergeordneten Rechner über eine nicht bezeichnete Busleitung. Ferner sind sie mit einem gemeinsamen Takt gesteuert. Die eingehenden Informationen werden von einem Rechner SR aufgenommen. Diese Informationen können z. B. Bildsignale für ein vollständiges Bild sein, Informationen zur Positionierung und Darstellung eines Cursors oder eines Fadenkreuzes. Im ersten Fall muß der Rechner einen Bildspeicher enthalten, in dem ein vollständiges Bild gespeichert werden kann. Die Bildsignale werden synchron mit der Ablenkung des Elektronenstrahls im Sichtgerät SG ausgelesen. Die Leitungen für die hierzu erforderlichen Synchronisationssignale sind der Übersichtlichkeit halber in Figur 1 nicht eingetragen. Als weitere Information kann der Rechner SR ein Signal erhalten, das die Priorität angibt, mit der die von ihm abgegebenen Bildsignale dargestellt werden sollen. Z. B. kann der Bildhintergrund die niedrigste Priorität erhalten, damit er von jeder anderen Information überschrieben werden kann. Beschriftungen von Kurven oder anderen Bildteilen sollte die höchste Priorität zugeordnet werden, damit sie in jedem Falle lesbar sind.

Die Bildsignale werden vom Rechner SR über acht Ausgänge V den Eingängen D von acht bistabilen Kippstufen FF1 zugeführt, und zwar zu einem Zeitpunkt, der von der Position des Abtaststrahls im Sichtgerät SG bestimmt ist, damit die Bildsignale an der gewünschten Stelle auf dem Bildschirm zu einer Bildelementdarstellung führen. In dem Taktimpulsintervall, das der gewünschten Bildsignalübertragung zur Farbtabelle FT vorangeht, schalten die Rechner SR aller Signalquellen, die Zugriff zum Bus DL wünschen, bzw. die Bildsignale zur Darstellung in demselben Bildelement abgeben wollen, über Ausgänge P Prioritätssignale auf den Eingang eines Registers REG. Mit dem nächsten, an einem Ausgang T des Rechners SR erscheinenden Taktimpuls werden diese Prioritätssignale in das Register REG übernommen, in einem Decoder DEC2 decodiert und als (1 aus 8)-Signale auf die Prioritätsleitungen PL geschaltet. Gleichzeitig werden in einem weiteren Decoder DEC1 decodierte Prioritätssignale erzeugt und den acht höherwertigen von neun ersten Ein-

gängen AO, A1 ... A8 eines Vergleichers VGL zugeführt. Die acht niederwertigeren der zweiten Eingänge BO, B1 ... B8 des Vergleichers VGL liegen an den Prioritätsleitungen PL. Der niederwertigste AO der ersten Eingänge und der höchstwertige B8 der zweiten Eingänge liegen an log. "O"-Signal. Dies bedeutet, daß die decodierten Prioritätssignale um eine Stelle in Richtung der höherwertigen Bits, also "nach links" gegenüber dem auf den Prioritätsleitungen PL gebildeten Signal verschoben ist. Ist die Dualzahl der den ersten Eingängen AO, A1 ... A8 des Vergleichers VGL zugeführten Prioritäts-signale größer als die der den zweiten Eingängen BO, B1 ... B8 zugeführten Signale, gibt der Vergleicher VGL an seinem Ausgang C ein Freigabesignal auf den Eingang D von bistabilen Kippstufen FF3, die mit dem nächsten Taktimpuls gesetzt werden, so daß als Torschaltung dienende NOR-Glieder NOR die Ausgangssignale von Kippstufen FF2 zu den Datenleitungen DL durchschalten. Die Kippstufen FF2 dienen zur Verzögerung der Bildsignale um eine Taktimpulsperiode, damit die durch den Vergleich verursachte Verzögerung kompensiert wird. Ist die den ersten Eingängen AO, A1 ... A8 zugeführte Dualzahl kleiner als die den Eingängen BO, B1 ... B8 zugeführte, werden die Kippstufen FF3 nicht gesetzt und die vom Rechner SR ausgegebenen Bildsignale werden nicht auf die Datenleitungen DL geschaltet.

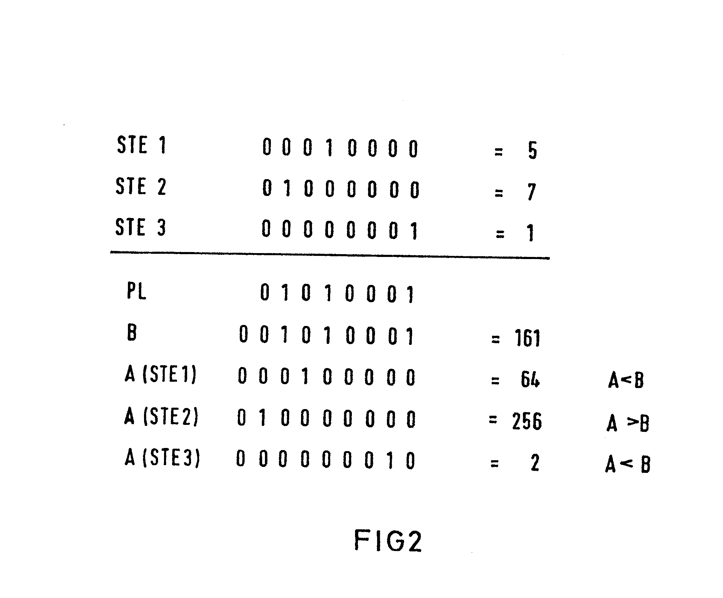

In Figur 2 ist ein Beispiel veranschaulicht, in dem die Signalquellen SQ1, SQ2, SQ3 gleichzeitig eine Anforderung auf Zugriff zur Busleitung stellen. Die von den Decodern DEC1, DEC2 dieser drei Quellen abgegebenen Signalkombinationen sind in den obersten drei Zeilen dargestellt. In der Quelle SQ1 hat diese Signalkombination den Wert 5, in der Quelle SQ2 den Wert 7 und in der Quelle SQ3 den Wert 1. Demgemäß hat die Quelle SQ2 mit 7 die höchste Priorität. Auf den Prioritätsleitungen PL werden diese Signale überlagert und die neue Signalkombination wird den niederwertigeren Eingängen der Vergleicher zugeführt.

Der höchstwertige Eingang liegt konstant an dem Signal log. "0". Den Eingängen B0, B1 ... B8 aller Vergleicher wird daher eine Dualzahl B mit dem Wert 161 zugeführt. Die den Eingängen A0, A1 ... A8 der Vergleicher zugeführten Signalkombinationen A(SQ1), A(SQ2), A(SQ3) sind in den drei letzten Zeilen der Figur 2 angegeben. Als Dualzahlen ergeben diese die Werte 64, 526 und 2. Demgemäß ist in den Quellen SQ1 und SQ3 die Zahl A kleiner als B und in der Quelle SQ2 größer als B. In dieser Quelle wird ein Freigabesignal auf die Kippstufen FF3 gegeben und die Bildsignale werden auf die Datenleitungen DL durchgeschaltet.

5 Patentansprüche
2 Figuren

0192049

## Patentansprüche

1. Schaltungsanordnung zum Übertragen von Daten über eine Daten- und Prioritätsleitungen aufweisende Busleitung, an die mehrere Signalquellen angeschlossen sind, von denen diejenigen, welche eine Anforderung auf Zugriff auf die Busleitung stellen, gleichzeitig Anforderungssignale unterschiedlicher Priorität auf die Prioritätsleitungen schalten, das jeweils abgegebene Anforderungssignal mit dem auf der Prioritätsleitung gebildeten Signal in einer Vergleicheranordnung vergleichen und die Signalquelle mit dem Anforderungssignal höchster Priorität Daten auf die Datenleitungen schaltet, g e k e n n z e i c h n e t   d u r c h

- die Signalquellen (SQ1, SQ2, SQ3) schalten auf die Prioritätsleitungen (PL) die Anforderungssignale als (1 aus n)-Signale, wobei der Signalwert gleich der Priorität ist;

- die Vergleicheranordnungen bilden aus den Anforderungssignalen ein Vergleichssignal, vergleichen dieses mit dem auf den Prioritätsleitungen gebildeten Signal und geben ein Freigabesignal zum Aufschalten der Daten auf die Datenleitungen ab, wenn das höchstwertige Signal der auf der Prioritätsleitung gebildeten Signalkombination gleich der Priorität des Anforderungssignals der eigenen Signalquelle ist.

2. Schaltungsanordnung nach Anspruch 1,   g e k e n n -   z e i c h n e t   d u r c h

- die Vergleicheranordnungen bilden aus den codierten Anforderungssignalen durch duale Multiplikation mit dem Faktor 2 ein Vergleichssignal, das von einem dualen Vergleicher (VGL) mit dem auf den Prioritätsleitungen (PL) gebildeten Signal verglichen wird, und

- der duale Vergleicher (VGL) gibt ein Freigabesignal zum Aufschalten der Daten auf die Datenleitungen (DL) ab, wenn das Vergleichssignal größer als das auf den Prioritätsleitungen (PL) gebildete Signal ist.

3. Schaltungsanordnung nach Anspruch 2, d a d u r c h g e k e n n z e i c h n e t , daß der duale Vergleicher (VGL) bei n-stelligen Anforderungssignalen je n + 1 Eingänge (AO, Al ... A8; BO, Bl ... B8) für die zu vergleichenden Signale hat, und daß das Vergleichssignal den Eingängen (Al ... A8) für die n höherwertigen Stellen und das auf den Prioritätsleitungen gebildete Signal den Eingängen (BO ... B7) für die n niederwertigen Stellen zugeführt ist und daß den beiden restlichen Eingängen (AO, B8) jeweils Nullsignal zugeführt ist.

4. Schaltungsanordnung nach Anspruch 2 oder 3, d a - d u r c h g e k e n n z e i c h n e t , daß das Anforderungssignal codiert parallel zwei (1 aus n)-Decodern (DEC1, DEC2) zugeführt ist, an deren einen der Vergleicher (VGL) und an deren anderen die Prioritätsleitungen (PL) angeschlossen sind.

5. Verwendung einer Anordnung nach einem der Ansprüche 1 bis 4 in einer Sichtgerätesteuerung mit einer Farbtabelle (FT), einem Digital-Analog-Umsetzer (DAU) und Videosignalquellen, wobei die Signalquellen (SQ1, SQ2, SQ3) die Videosignalquellen sind, die im Takt der Bildpunktabtastung Anforderungen auf Zugriff auf die Busleitung (DL) stellen, und die Farbtabelle (FT) an die Busleitung (DL) angeschlossen ist.

FIG 1

| STE 1 | 0 0 0 1 0 0 0 0 | = 5 | |
|---|---|---|---|
| STE 2 | 0 1 0 0 0 0 0 0 | = 7 | |
| STE 3 | 0 0 0 0 0 0 0 1 | = 1 | |

| PL | 0 1 0 1 0 0 0 1 | | |
|---|---|---|---|
| B | 0 0 1 0 1 0 0 0 1 | = 161 | |
| A (STE1) | 0 0 0 1 0 0 0 0 | = 64 | A < B |
| A (STE2) | 0 1 0 0 0 0 0 0 | = 256 | A > B |
| A (STE3) | 0 0 0 0 0 0 1 0 | = 2 | A < B |

FIG2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | EP-A-0 075 625 (POTASH)<br>* Seite 10, Zeile 12 - Seite 11, Zeile 11; Seite 17, Zeile 12 - Seite 19, Zeile 11; Figur 4A * | 1 | G 06 F 13/36<br>G 09 G 1/28 |
| | --- | | |
| A | GB-A-1 158 889 (DRISCOLL)<br>* Seite 2, Zeile 127 - Seite 3, Zeile 100; Figur 1 * | 1 | |
| | --- | | |
| A | US-A-3 863 225 (PREISS)<br>* Spalte 9, Zeile 27 - Spalte 12, Zeile 59; Figur 3 * | 1 | |
| | --- | | |
| A | EP-A-0 015 797 (BOURASSIN)<br>* Seite 7, Zeile 14 - Seite 8, Zeile 25; Figur 2 * | 5 | RECHERCHIERTE SACHGEBIETE (Int Cl.4) |
| | --- | | |
| P,X | EP-A-0 139 569 (BOMBA)<br>* Seite 49, Zeile 49 - Seite 53, Zeile 30; Figur 8 * | 1 | G 06 F 13/36<br>H 04 B 1/20 |
| | ----- | | |

Der vorliegende Recherchenbericht wurde für alle Patentansprüche erstellt.

| Recherchenort | Abschlußdatum der Recherche | Prufer |
|---|---|---|
| DEN HAAG | 08-04-1986 | CHUGG D.J. |

KATEGORIE DER GENANNTEN DOKUMENTE
X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82